# EUROPEAN PATENT SPECIFICATION

(11) **EP 1 730 956 B1**
(45) Date of publication and mention of the grant of the patent: **06.01.2016**
(21) Application number: 05716245.5
(22) Date of filing: 19.03.2005
(51) Int. Cl.: H04N 5/76

(54) **METHOD AND DEVICE FOR GENERATING A MENU**
VERFAHREN UND EINRICHTUNG ZUM ERZEUGEN EINES MENÜS
PROCEDE ET DISPOSITIF POUR LA PREPARATION D'UN MENU

(30) Priority: 02.04.2004 EP 04300178
(43) Date of publication of application: 13.12.2006
(73) Proprietor: Thomson Licensing, 92130 Issy-les-Moulineaux (FR)
(72) Inventor: Tao, Cheng, Singapore 530165 (SG); Chang, Chiew Mun, Singapore 507025 (SG); Kwok, Kwong Heng, 328882 Singapore (SG)
(74) Representative: Thies, Stephan
(86) International application number: PCT/EP2005/002965
(87) International publication number: WO 2005/099254

(56) References cited:
- EP-A- 0 629 085
- US-A1- 2003 229 894
- US-B1- 6 340 971

## Description

The invention refers to a method and a device for generating a menu for a video recording medium, wherein the menu is coded according to an MPEG like standard. Such MPEG like standard is for example known as MPEG-1, MPEG-2 but similar encoding methods exist that also use base pictures and predicted pictures based on the base pictures.

In known devices for generating a menu for video recordings, menu encoding is done by a hardware encoder. This may be seen to have the disadvantage that during the encoding a live picture can not be presented because there is only one encoder available in the device.

In other known devices for generating a menu for video recordings the menu is encoded as one independently encoded picture by a software encoder. In this case a live picture can be presented during the menu generation, but it may be seen to have the disadvantage that it takes at least 30secs to encode a menu including a logo and thumbnail(s) of recordings, and the user can't access the recording medium or a tray holding it during this time.

For supporting the search of a desired scene while viewing moving images, US 2003/0229894 discloses methods and apparatuses where, together with moving images, a plurality of reduced index images are displayed and updated in a manner such that a temporal relation of the reduced images to progression of the moving images is recognizable. The index images are derived by size reduction and are intra-image coded.

For a keyframe-based display of a video presentation enabling a user to select, US 6,340,971 B1 discloses a method and device where various keyframes are displayed in parallel, a keyframe is selected, and presentation is controlled to start at the selected keyframe. Encoding or decoding of the keyframes is not considered.

For facilitating image reproduction in trick-play modes on high-definition video signals recorded on video tape, EP 0 629 085 A2 discloses an apparatus where a predictively coded HDTV signal is decoded, decimated, and encoded into an intra-frame encoded low-resolution video signal. The high-definition signal and the low-resolution signal are interleaved and recorded onto the video tape in such a way that a substantial portion of the low-resolution signal is recovered during trick-playback.

It is an object of this invention to propose an improved method and device for generating a menu for video recordings.

According to the invention, menus are divided into two pictures, namely an I-picture or independently coded picture for the menu background and a P-picture or predictively coded picture for only the thumbnail(s) of recordings.

A method according to the invention starts with a predefined intra-coded picture that consists of blocks and generates an inter-coded picture, where the inter-coded picture contains no change information for predefined blocks while it contains change information for selected blocks. The selected blocks contain picture information that is representative of recordings on the recording medium. Both, the intra-coded picture and the inter-coded picture are taken as menu information and stored accordingly on the recording medium.

Intra-coded pictures are often referred to as I-pictures while inter-coded pictures are usually referred to as P-pictures. An inter-coded picture is based on a preceding intra-coded picture and contains just the change information between these two pictures.

An advantage of the inventive method is that no time is needed for encoding the predefined picture. The predefined picture is preferably the background of the menu as for example a company logo, a user defined picture or the like. The only time to be spent is for encoding a small number of selected blocks that contain the information representative of a recording on the recording medium. This allows to quickly finish the menu and thus to use a comparatively slow or low performance encoder without negative effect to the user.

Preferably, the picture information representative of more than one recording is used for generating the inter-coded picture. If a menu contains several recordings, smaller bock areas for each recording are used. This has the advantage that a menu for several recordings is generated in about the same time as for one or a very small number of recordings.

According to the invention a menu is updated with information related to an additional recording on the recording medium by generating an inter-coded picture having changes only for selected blocks containing picture information representative of the additional recording. Selected blocks are for example selected for recording 1, recording 2 and so on, which are displayed on the same menu. Changes to the content of the recording medium that suggest a menu updating comprise adding or removing a recording or replacing the representative picture information for one recording by a different one for example one selected by the user.

Advantageously, an inter-coded picture is added to the previous inter-coded picture. It may either replace the previous inter-coded picture with the new one or combine the previous inter-coded picture with the new one or add the new one as a further picture.

A device for generating a menu for a video recording medium comprises a predefined intra-coded picture memory, a representative picture memory, and an encoder for generating an inter-coded picture using an output of the intra-coded picture memory as basis and an output of the representative picture memory as change information to be encoded. This has the advantage of time saving as the predefined basis picture is already encoded and only differences need to be encoded. For this not much encoding capacity is needed.

Preferably, the device according to the invention is provided with a fast encoder and a slow encoder wherein the slow encoder is used for menu generation and the fast encoder is used for encoding a moving video sequence. The slow encoder preferably is represented by software while the fast encoder preferably is represented as hardware. One advantage is that the fast encoder is enabled to work uninterrupted by the menu generation, e.g. for providing a display device with moving image information or for providing a recording device with encoded moving image information while the slow encoder performs the menu generation concurrently but independently. Thanks to the time saving of the invention even the menu generation by the slow encoder does not give the user the feeling of low speed performance.

A recording medium according to the invention has recorded on it one or several recordings like videos, still pictures, audio sequences etc., and a menu recording for information about at least one recording. The menu recording comprises a predefined intra-coded picture, which is the same for every recording medium generated by the same recording device, and at least one inter-coded picture having difference information only for selected areas, wherein the difference information is related to picture information representative of a recording. That means the inter-coded picture contains change information only for certain areas, for example a certain range of blocks, and differences exist only there. The differences refer to one or several picture information representative of a recording on the recording medium.

More details and advantages of the invention will become apparent from the following description.
- Figs. 1 to 3: show examples of pictures used for menu generation,
- Fig. 4: shows a device according to the invention, and
- Fig. 5: shows a recording medium according to the invention.

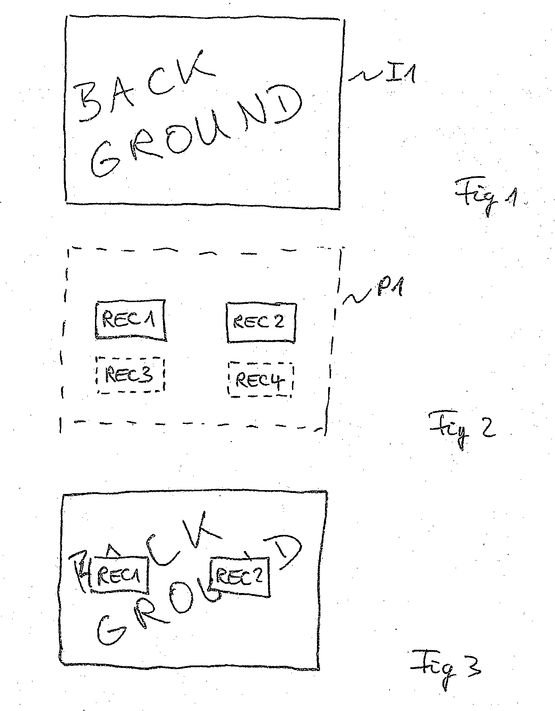

In known systems, an MPEG encoder is used to encode a menu as shown in **Fig. 3** that includes a background and thumbnails of recordings. Such method is called hardware encoding because it is done using the MPEG encoder hardware. Hardware encoding comprises stopping to encode a live picture, using the MPEG encoder to encode one still picture, and resuming to encode the live picture. Disadvantages of hardware encoding are that when the MPEG encoder is stopped, the live picture will be frozen, and the user can't view the live video. Also, sometimes the encoder can't be stopped properly, the still picture can't be encoded, and the user, despite seeing a title of a recording in the title list, can't see this recording in the menu. Also, even if the still picture is successfully encoded, a few seconds of live picture are lost, and user will feel pain if the end of story is shown during these few seconds.

In other known systems, software encoding is used to encode a menu as shown in **Fig. 3** that includes a background and thumbnails of recordings. The menu is encoded as a single I-picture and each time after a new recording has been done encoding comprises applying DCT and quantization to all video blocks. Disadvantages of single I-frame software encoding are that with the large number of calculations involved and with host CPUs of the systems being not so fast, the speed of encoding the menu is obviously slow compared to hardware encoding.

With this invention, the software encoding is used to encode the menu in a way that, although the menu includes a background and thumbnails of recordings, only thumbnails are encoded when a new recording is done. **Figs. 1-3** show the structure of the menu according to this invention.

**Fig. 1** shows an example of a predefined intra-coded picture 11 being indicated as "background".

**Fig. 2** shows an inter-coded picture P1 containing change information only in selected blocks REC1 and REC2. It indicates further possible selected blocks REC3, REC4. Selected blocks REC1 and REC2 contain picture information representative of two recordings on a recording medium. Selected blocks REC3, REC4 are intended to contain picture information representative of future recordings on the recording medium.

Fig. 3 shows a menu comprising a menu background and selected blocks REC1, REC2 containing picture information representative of two recordings on a recording medium.

The P-picture software encoding according to this invention comprises the following steps: The background picture is considered as I-picture in the menu, so it takes no time to encode it. Because the background picture is a still picture in MPEG format, it is usually stored in static memory. The thumbnail of a new recording is considered as P-picture. It only takes time to encode the difference between the background and the menu, which is the thumbnail(s). Hence, DCT and quantization are applied only to video blocks of thumbnail (s) when the new recording is done.

The advantages are that a live picture is still there after the new recording is done because there is no need to stop the hardware MPEG encoder to encode the still picture, and that this method is faster than normal single I-frame software encoding, and that users can see a live picture during menu generation if the recorder is in "live" mode whereas known devices do not show a live picture during menu generation, and that it takes a shorter time to software encode the menu because I-frame (background) is allays the same in every menu and only P-frame is software encoded after a new recording has been done.

Advantageously, for the generation of the thumbnail REC3 of a new recording, any extra picture decoding is avoided if, during the new recording, the first complete picture in an encoder reference memory is duplicated into a special, dedicated extra memory area, and if, after the new recording, the picture in the extra memory area is subsampled into a thumbnail size.

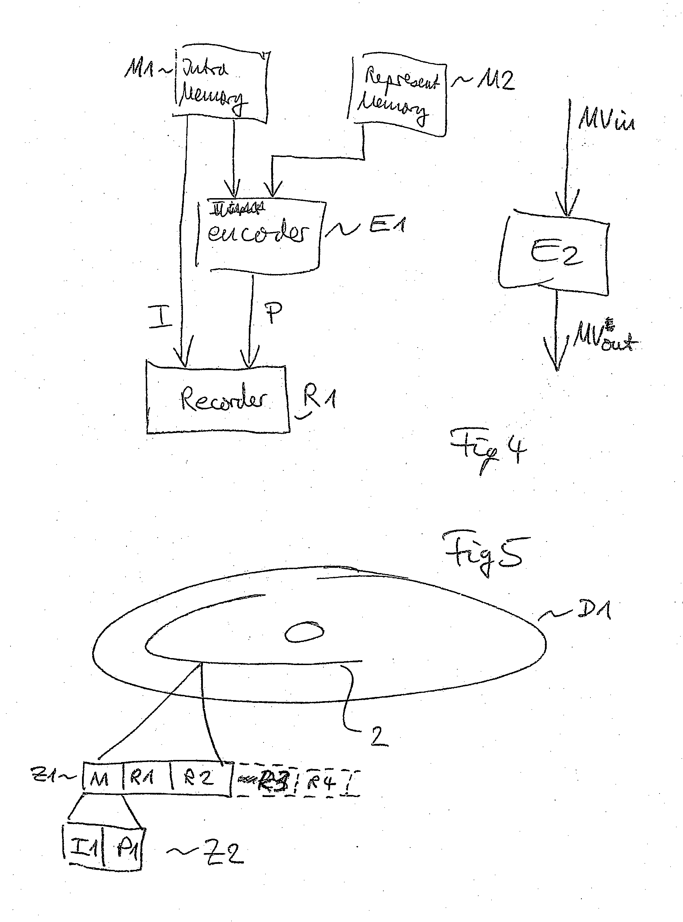

Fig. 4 schematically shows important elements of a device according to the invention. A memory M1 is provided for storing one or several intra-coded pictures I1 while a memory M2 is provided for storing picture information representative of one or several recordings on the recording medium. An encoder E1 uses the intra-coded picture from memory M1 and the representative picture information from memory M2 to calculate the inter-coded picture P1. This calculation refers only to the selected blocks shown as REC1 and REC2 in Fig. 2 for the example of two recordings. The calculated inter-coded picture P1 is transmitted via a line P to a recorder R1 that also receives the intra-coded picture 11 via line I for recording both as menu information on a recording medium.

The encoder E1 is a slow encoder, for example a software encoder, while another encoder E2 is a fast encoder preferably a dedicated encoder IC that receives moving video input MVin to be encoded and outputs encoded moving video information MVout. As can be seen, both encoders E1, E2 work in parallel and independently of each other.

Fig. 5 shows diagrammatically a recording medium as an optical disk D1 having a track 2 containing recordings as indicated in the zoomed area Z1 showing a recorded menu M, a first recording R1 and a second recording R2. Possible future recordings R3, R4, are indicated by dashed lines. A second zoom area Z2 shows that the menu is provided with an intra-coded picture I1 and an inter-coded picture P1. It is to be understood, that this schematic figure shows only very few details relevant to the invention.

## Claims

1. Method for generating a menu (M) for information about recordings (R1, R2) on a video recording medium (D1), the menu (M) being coded according to an MPEG like standard, the method having a step of
- creating an intra-coded picture (I1) containing the menu background and comprising selected blocks (REC1, REC2, REC3, REC4) intended to contain a picture information representative of the recordings (R1, R2) on the video recording medium (D1),
and **characterized by** the steps of
- generating a first inter-coded picture (P1) having change information for those selected blocks (REC1, REC2) that contain picture information representative of the recordings (R1, R2) on the recording medium (D1), and having no change information everywhere else,
- writing both, the intra-coded picture (I1) and the first inter-coded picture (P1) as menu information onto the video recording medium (D1).

2. Method according to claim 1, wherein picture information representative for more than one recording (R1, R2) is used for generating the inter-coded picture (P1).

3. Method according to one of the preceding claims, wherein the menu (M) is updated with information related to another recording (R3, R4) on the recording medium (D1), comprising generating a second inter-coded picture having changes only for those selected blocks (REC3, REC4) that contain picture information representative of the another recording (R3, R4).

4. Method according to Claim 3, wherein the second inter-coded picture is added to the first inter-coded picture (P1).

5. The method of one of the preceding claims, where for generating the picture information (REC3) representative for a new recording, a picture from an encoder display buffer is duplicated into an extra memory area during the new recording, and the picture in the extra memory area is subsampled after the new recording has been terminated.

6. Device for generating a menu (M) for information about recordings (R1, R2, R3, R4) on a video recording medium (D1), the menu (M) being coded according to an MPEG like standard, the device having a predefined intra-coded picture memory (M1), a representative picture memory (M2) and a recording unit (R1), and **characterized by** having an encoder (E1) equipped to generate an inter-coded picture (P1) having change information for those selected blocks (REC1, REC2, REC3, REC4) that contain picture information representative of the recordings (R1, R2, R3, R4) on the recording medium (D1), and having no change information everywhere else, and in that the recording unit (R1) is equipped to record the predefined intra-coded picture (I1) and the inter-coded picture (P1) onto the video recording medium (D1).

7. Device according to claim 6, where the encoder (E1) is a slow encoder, the device additionally comprising a fast encoder (E2) used for encoding a moving video sequence.

8. The device of claim 7, where the fast encoder (E2) has a display buffer, the device additionally has an extra memory area and is equipped and arranged to copy, during a new recording, a picture from the display buffer into the extra memory area, and to subsample, after the new recording, the picture in the extra memory area into a picture information (REC3) representative for the new recording.

9. Recording medium (D1) having recorded on it recordings (R1, R2, R3, R4) and a menu (M) for information about the recordings (R1, R2, R3, R4) **characterized in that** the menu (M) comprises a predefined intra-coded picture (I1) and at least one inter-coded picture (P1) having difference information only for selected areas (REC1, REC2), the difference information being related to picture information (REC1, REC2, REC3, REC4) representative for the recordings (R1, R2, R3, R4) on the recording medium (D1).

## Patentansprüche

1. Verfahren zum Erzeugen eines Menüs (M) für Informationen über Aufzeichnungen (R1, R2) auf einem Videoaufzeichnungsmedium (D1), wobei das Menü (M) in Übereinstimmung mit einer MPEG-artigen Norm codiert ist, wobei das Verfahren einen folgenden Schritt aufweist:
- Erzeugen eines intra-codierten Bilds (I1), das den Menühintergrund enthält und das ausgewählte Blöcke (REC1, REC2, REC3, REC4) umfasst, die dafür bestimmt sind, Bildinformationen zu enthalten, die repräsentativ für die Aufzeichnungen (R1, R2) auf dem Videoaufzeichnungsmedium (D1) sind,
und **gekennzeichnet durch** die folgenden Schritte:
- Erzeugen eines ersten inter-codierten Bilds (PI), das für jene ausgewählten Blöcke (REC1, REC2), die Bildinformationen enthalten, die repräsentativ für die Aufzeichnungen (R1, R2) auf dem Aufzeichnungsmedium (D1) sind, Änderungsinformationen aufweist und das überall sonst keine Änderungsinformationen aufweist,
- Schreiben sowohl des intra-codierten Bilds (I1) als auch des ersten inter-codierten Bilds (P1) als Menüinformationen auf das Videoaufzeichnungsmedium (D1).

2. Verfahren nach Anspruch 1, wobei zum Erzeugen des inter-codierten Bilds (P1) Bildinformationen verwendet werden, die repräsentativ für mehr als eine Aufzeichnung (R1, R2) sind.

3. Verfahren nach einem der vorhergehenden Ansprüche, wobei das Menü (M) mit Informationen aktualisiert wird, die sich auf eine andere Aufzeichnung (R3, R4) auf dem Aufzeichnungsmedium (D1) beziehen, wobei es das Erzeugen eines zweiten inter-codierten Bilds, das Änderungen nur für jene ausgewählten Blöcke (REC3, REC4) aufweist, die Bildinformationen enthalten, die repräsentativ für die andere Aufzeichnung (R3, R4) sind, umfasst.

4. Verfahren nach Anspruch 3, wobei das zweite inter-codierte Bild zu dem ersten inter-codierten Bild (P1) hinzugefügt wird.

5. Verfahren nach einem der vorhergehenden Ansprüche, wobei zum Erzeugen der Bildinformationen (REC3), die repräsentativ für eine neue Aufzeichnung sind, während der neuen Aufzeichnung ein Bild aus einem Codiereranzeigepuffer in einen Zusatzspeicherbereich dupliziert wird und das Bild in dem Zusatzspeicherbereich unterabgetastet wird, nachdem die neue Aufzeichnung abgeschlossen worden ist.

6. Vorrichtung zum Erzeugen eines Menüs (M) für Informationen über Aufzeichnungen (R1, R2, R3, R4) auf einem Videoaufzeichnungsmedium (D1), wobei das Menü (M) in Übereinstimmung mit einer MPEG-artigen Norm codiert ist, wobei die Vorrichtung einen Speicher (M1) für vordefinierte intra-codierte Bilder, einen Speicher (M2) für repräsentative Bilder und eine Aufzeichnungseinheit (R1) aufweist, und **dadurch gekennzeichnet, dass** sie einen Codierer (E1) aufweist, der dafür ausgestattet ist, ein inter-codiertes Bild (P1) zu erzeugen, das für jene ausgewählten Blöcke (REC1, REC2, REC3, REC4), die Bildinformationen enthalten, die repräsentativ für die Aufzeichnungen (R1, R2, R3, R4) auf dem Aufzeichnungsmedium (D1) sind, Änderungsinformationen aufweist und das überall sonst keine Änderungsinformationen aufweist, und dadurch, dass die Aufzeichnungseinheit (R1) dafür ausgestattet ist, das vordefinierte intra-codierte Bild (I1) und das inter-codierte Bild (P1) auf dem Videoaufzeichnungsmedium (D1) aufzuzeichnen.

7. Vorrichtung nach Anspruch 6, wobei der Codierer (E1) ein langsamer Codierer ist, wobei die Vorrichtung außerdem einen schnellen Codierer (E2) umfasst, der zum Codieren einer bewegten Videosequenz verwendet wird.

8. Vorrichtung nach Anspruch 7, wobei der schnelle Codierer (E2) einen Anzeigepuffer aufweist, wobei die Vorrichtung außerdem einen Zusatzspeicherbereich aufweist und dafür ausgestattet und ausgelegt ist, während einer neuen Aufzeichnung ein Bild aus dem Anzeigepuffer in den Zusatzspeicherbereich zu kopieren und das Bild in dem Zusatzspeicherbereich nach der neuen Aufzeichnung zu Bildinformationen (REC3), die repräsentativ für die neue Aufzeichnung sind, unterabzutasten.

9. Aufzeichnungsmedium (D1), auf dem Aufzeichnungen (R1, R2, R3, R4) und ein Menü (M) für Informationen über die Aufzeichnungen (R1, R2, R3, R4) aufgezeichnet sind, **dadurch gekennzeichnet, dass** das Menü (M) ein vordefiniertes intracodiertes Bild (I1) und mindestens ein inter-codiertes Bild (PI), das nur für ausgewählte Bereiche (REC1, REC2) Differenzinformationen aufweist, wobei sich die Differenzinformationen auf Bildinformationen (REC1, REC2, REC3, REC4) beziehen, die repräsentativ für die Aufzeichnungen (R1, R2, R3, R4) auf dem Aufzeichnungsmedium (D1) sind, umfasst.

## Revendications

1. Procédé de génération d'un menu (M) fournissant des informations sur les enregistrements (R1, R2) sur un support d'enregistrement vidéo (D1), le menu (M) étant codé conformément à une norme semblable à MPEG, ce procédé comprenant une étape de
- création d'une image à codage intra (I1) contenant l'arrière-plan de l'image et comprenant des blocs sélectionnés (REC1, REC2, REC3, REC4) destinés à contenir des images d'informations représentatives des enregistrements (R1, R2) sur le support d'enregistrement vidéo (D1),
et **caractérisé par** les étapes
- de génération d'une première image à codage inter (P1) contenant des informations de changement pour les blocs sélectionnés (REC1, REC2) qui contiennent des images d'informations représentatives des enregistrements (R1, R2) sur le support d'enregistrement (DI), et contenant des informations de non-changement partout ailleurs,
- d'écriture de l'image à codage intra (I1) et de la première image à codage inter (P1) comme informations du menu sur le support d'enregistrement vidéo (D1).

2. Procédé selon la revendication 1, dans lequel les images d'informations représentatives de plusieurs enregistrements (R1, R2) sont utilisées pour la génération de l'image à codage inter (PI).

3. Procédé selon l'une des revendications précédentes, dans lequel le menu (M) est mis à jour avec les informations relatives à un autre enregistrement (R3, R4) sur le support d'enregistrement (D1), comprenant la génération d'une deuxième image à codage inter contenant des changements uniquement pour les blocs sélectionnés (REC3, REC4) qui contiennent des images d'informations représentatives d'un autre enregistrement (R3, R4).

4. Procédé selon la revendication 3, dans lequel la deuxième image à codage inter est ajoutée à la première image à codage inter (P1).

5. Le procédé de l'une des revendications précédentes, où pour la génération de l'image d'informations (REC3) représentative d'un nouvel enregistrement, une image d'un tampon d'affichage du codeur est dupliquée dans un espace de mémoire supplémentaire pendant le nouvel enregistrement, et l'image dans l'espace de mémoire supplémentaire est sous-échantillonnée après la fin du nouvel enregistrement.

6. Dispositif de génération d'un menu (M) d'informations sur les enregistrements (R1, R2, R3, R4) contenus sur un support d'enregistrement vidéo (D1), le menu (M) étant codé conformément à une norme semblable à MPEG, le dispositif disposant d'une mémoire d'images à codage intra prédéfinie (M1), d'une mémoire des images représentatives (M2) et d'une unité d'enregistrement (R1), et **caractérisé par** un codeur (E1) pour générer une image à codage inter (P1) contenant des informations de changement pour les blocs sélectionnés (REC1, REC2, REC3, REC4) qui contiennent des images d'informations représentatives des enregistrements (R1, R2, R3, R4) sur le support d'enregistrement (D1), et des informations de non-changement partout ailleurs, et en ce que l'unité d'enregistrement (R1) est équipée pour enregistrer l'image à codage intra (I1) et l'image à codage inter (P1) sur le support d'enregistrement vidéo (D1).

7. Dispositif selon la revendication 6, dans lequel le codeur (E1) est un codeur lent, le dispositif comprenant en outre un codeur rapide (E2) utilisé pour coder une séquence vidéo en mouvement.

8. Le dispositif de la revendication 7, dans lequel le codeur rapide (E2) dispose d'un tampon d'affichage, ce dispositif dispose en outre d'un espace de mémoire supplémentaire et est équipé et préparé pour copier, pendant un nouvel enregistrement, une image d'un tampon d'affichage dans l'espace de mémoire supplémentaire, et pour sous-échantillonner, après le nouvel enregistrement, l'image dans l'espace de mémoire supplémentaire dans une image d'informations (REC3) représentative du nouvel enregistrement.

9. Support d'enregistrement (D1) sur lequel sont enregistrés des enregistrements (R1, R2, R3, R4) et un menu (M) d'informations sur les enregistrements (R1, R2, R3, R4) **caractérisé en ce que** le menu (M) comprend une image à codage intra (I1) et au moins une image à codage inter (P1) contenant des informations de différence uniquement pour les zones sélectionnées (REC1, REC2), les informations de différence étant liées aux images d'informations (REC1, REC2, REC3, REC4) représentatives des enregistrements (R1, R2, R3, R4) sur le support d'enregistrement (D1).
